# EUROPEAN PATENT SPECIFICATION

(11) **EP 0 275 045 B1**
(45) Date of publication and mention of the grant of the patent: **07.07.1993**
(21) Application number: 88100180.4
(22) Date of filing: 08.01.1988
(51) Int. Cl.: F24F 11/00, B60H 1/32

(54) **Device for controlling capacity of variable capacity compressor**
Gerät zur Leistungssteuerung für einen Kompressor mit variabler Leistung
Appareil pour commander la puissance d'un compresseur muni d'une puissance variable

(30) Priority: 10.01.1987 JP 2637/87; 10.01.1987 JP 1500/87 U
(43) Date of publication of application: 20.07.1988
(73) Proprietor: SANDEN CORPORATION, Isesaki-shi Gunma, 372 (JP)
(72) Inventor: Inoue, Atsuo, Isesaki-shi Gunma, 372 (JP); Sato, Motoharu, Honjo-shi Saitama, 367 (JP)
(74) Representative: Prüfer, Lutz H., Dipl.-Phys.

(56) References cited:
- EP-A- 0 087 770
- EP-A- 0 194 029
- PATENT ABSTRACTS OF JAPAN vol. 7, no. 71 (M-202) (1216) 24 March 1983; & JP-A-58 000030 (TOYOTA JIDO SHOKKI SEISAKUSHO K.K.) 05.01.1983

## Description

### TECHNICAL FIELD

The present invention relates to a device for controlling the capacity of a compressor in an automotive air conditioning system, and more particularly, to a device which controls the capacity of the compressor in accordance with the change of refrigerant load.

### BACKGROUND OF THE INVENTION

The air conditioning system is generally designed to achieve a predetermined air conditioning performance at a predetermined air conditioning load when the automobile is driven at an average speed. But, a compressor of automobile air conditioning system is driven by the engine of the automobile. Thus, when the vehicle engine is idling or is being driven at low speeds, the rotational speed of the compressor is correspondingly low. Therefore, the performance of the air conditioning system is adversely effected. On the other hand, when the vehicle is driven at high speeds, the rotational speed of the compressor is too high for efficient performance. Thus, electromagnetic clutches are used to control the operation of the compressor by intermittently stopping and starting the compressor.

However, there are many problems associated with continuously clutch cycling. For examples, when the engine is driven at high speeds and the capacity of the air conditioning system is large, it is necessary for the electromagnetic clutch to be turned on or off frequently. On the other hand, at low speed or when the vehicle engine is idling, the compressor is not sufficiently driven to maintain the desired temperature in the vehicle.

In order to solve the above-mentioned problems, a control system which controls the capacity of a compressor in accordance with detecting temperature on the outlet side of the evaporator is disclosed in published Japanese Patent Application Laid-open No. 58-30. In such a system, the performance of the air conditioning system is not directly detected. For example, even though the temperature in the compartment of the vehicle may be high, the capacity of the air conditioning system is reduced when the temperature on the outlet side of the evaporator becomes lower than a predetermined temperature. Thus, the capacity of the system is insufficient to cool the compartment of vehicle. In addition, when the vehicle is running, the capacity of the air conditioning system is changed frequently, thereby placing great stress and strain on the air conditioning system.

In addition, in order to solve the above-mentioned problems, a system which controls the capacity of the compressor by detecting the temperature on the outlet and inlet side of the evaporator, and comparing the detected temperatures with predetermined temperatures is disclosed in U.S. Patent No. 4,633,675. In this patent, sensors which are disposed at each locations detect the air temperatures on both side of the evaporator. However, for example, when the sensors detect decrease of the temperatures, even though the temperatures decrease until the predetermined temperature, the sensors do not operate in the predetermined action sometimes. Actually, the sensors operate after the temperatures decrease the predetermined temperature, thereby not being able to timely control the temperatures of the air.

EP-A-0 087 770 discloses a similar device having first and second temperature sensor means on the inlet and the outlet side of the evaporator. However, said document does not disclose how the different measuring and controlling devices are cooperating.

### SUMMARY OF THE INVENTION

It is a primary object of this invention to provide a device for controlling the capacity of a compressor in an automotive air conditioning system which can timely control the capacity of the compressor in accordance with changes of air conditioning load.

It is another object of this invention to provide a device for controlling the capacity of a compressor in an automotive air conditioning system which can reduce the intermittent operation of an electromagnetic clutch.

It is a further object of this invention to provide a device for controlling the capacity of a compressor in an automotive air conditioning system which can reduce uncomfortable feeling to passengers in a compartment of an automobile.

It is a further object of this invention to provide a device for controlling the capacity of a compressor in an automotive air conditioning system which can reduce running costs thereof.

The above objects of the present invention are achieved by a device as outlined in claims 1, 2 or 3.

Further objects, features, and other aspects of this invention will be understood from the following detailed description of the preferred embodiment of this invention referring to the attached drawings.

### BRIEF DESCRIPTION OF THE DRAWINGS

Fig. 1 is a block diagram of an automotive air conditioning system in accordance with a first embodiment of this invention as indicated in claims 1 and 2.

Fig. 2 is a flow chart illustrating the operaetion of a control device in accordance with the first embodiment of this invention.

Fig. 3 is a graph illustrating the change of pressure and temperature on evaporator under a high air conditioning load at normal vehicle speed.

Fig. 4 is a graph illustrating the change of pressure and temperature on evaporator under a middle air conditioning load and plural vehicle speeds.

Fig. 5 is a flow chart illustrating the operation of a control device in accordance with a second embodiment of this invention and specified in claim 2.

Fig. 6 is a graph illustrating the change of pressure on evaporator under plural air conditioning loads and a normal vehicle speed.

Fig. 7 is a block diagram of an automotive air conditioning system in accordance with a third embodiment of this invention as indicated in claim 3.

Fig. 8 is a flow chart illustrating the operation of a control device in accordance with said third embodiment of this invention.

Fig. 9 is a graph illustrating the change of pressure on evaporator under a high air conditioning load at normal vehicle speed.

Fig. 10 is a graph illustrating the change of pressure on evaporator under a middle air conditioning load at low vehicle speed.

Fig. 11 is a graph illustrating the change of temperature and pressure on evaporature under a middle air conditioning load at high vehicle speed.

### DETAILED DESCRIPTION OF THE PREFERRED EMBODIMENTS

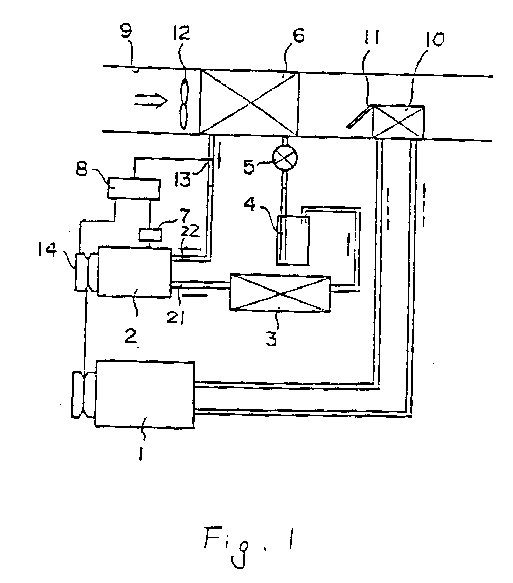

Referring to Fig. 1, there is shown an automotive air conditioning system which comprises a compressor 2 driven by an engine 1, a condenser 3, a receiver dryer 4, an expansion valve 5 and an evaporator 6 each of which is serially connected with one another to form a closed refrigerant circuit. Compressor 2 is provided with a capacity changing mechanism 7. The capacity of compressor 2 can be varied by operation of a capacity changing mechanism 7 based on a signal inputted from a control device 8. Where compressor 2 is of the scroll type, capacity changing mechanism 7 comprises an electromagnetic bypass valve which connects the inlet of the compressor to the intermediate fluid pockets through an intermediate chamber as shown in U.S. Patent As shown in Fig. 1, evaporator 6 is disposed on an air duct 9. A heater 10 which has a damper 11 is disposed backward of evaporator 6 on air duct 9 and a fan 12 is disposed forward of evaporator 6 on air duct 9. Heater 10 is connected to engine 1 through two conduits, so that a heater circuit is composed, and hot water is circulated in the heater circuit. The air is forced circuit to a compartment of a vehicle through evaporator 6 and heater 10 by operation of fan 12. A pressure sensor 13 which is connected to control device 8 is disposed on the outlet of evaporator 6 and detects refrigerant pressure PE therein. Control device 8 first calculates a pressure changing ratio P/t of refrigerant pressure PE until refrigerant pressure PE reaches the first predetermined pressure value after starting of compressor 2, and then compares the calculated pressure changing ratio P/t with a predetermined pressure changing ratio α. Based on the compared results, the range of pressure control is predetermined, i.e., either a first range A of predetermined values Pa - Pd or a second range B of predetermined values Pe - Ph is selected as the range of pressure control. Thereafter, each predetermined values such as a first predetermined value Pa or Pe as a first predetermined pressure P1, a second predetermined value Pb or Pf as a second predetermined pressure P2, a third predetermined value Pc or Pg as a third predetermined pressure P3 and a fourth predetermined value Pd or Ph as a fourth predetermined pressure P4 is compared with refrigerant pressure Pe which is detected by pressure sensor 13 on the outlet side of evaporator 6. The compared result is the output from control device 8 to capacity changing mechanism 7 or an electromagnetic clutch 14 which is mounted on compressor 2. Thus, the capacity of compressor 2 is changed to another capacity by capacity changing mechanism 7 or maintained continuously. Otherwise, electromagnetic clutch 14 is intermittently operated, and controls operation of compressor 2.

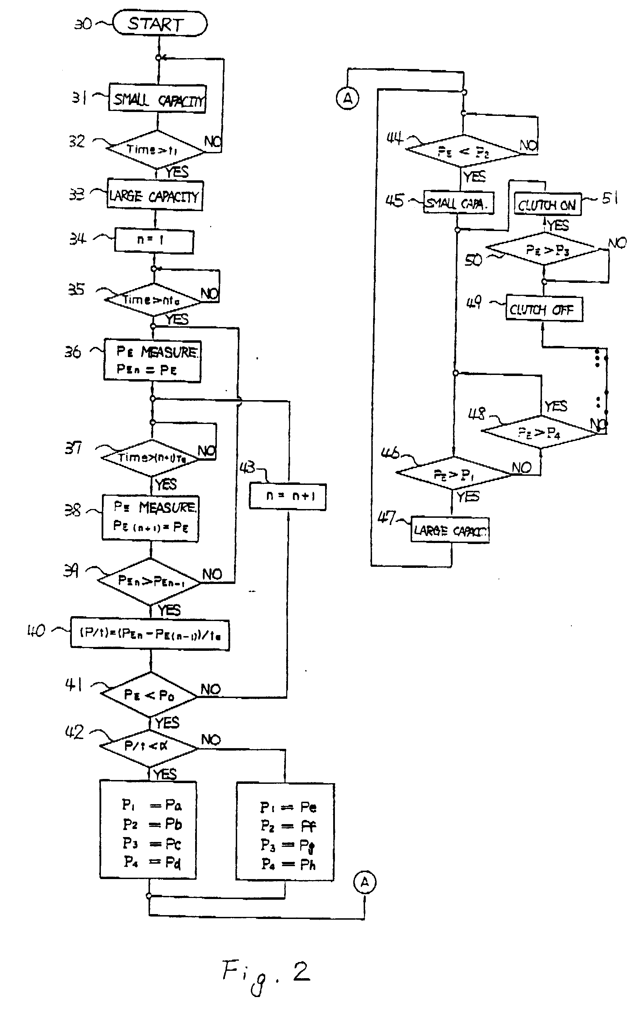

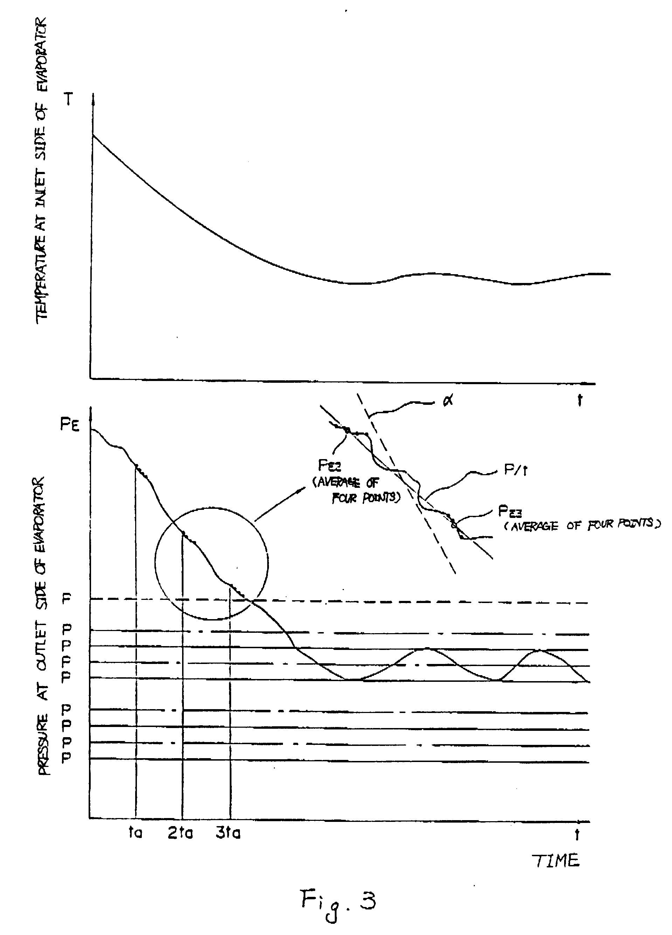

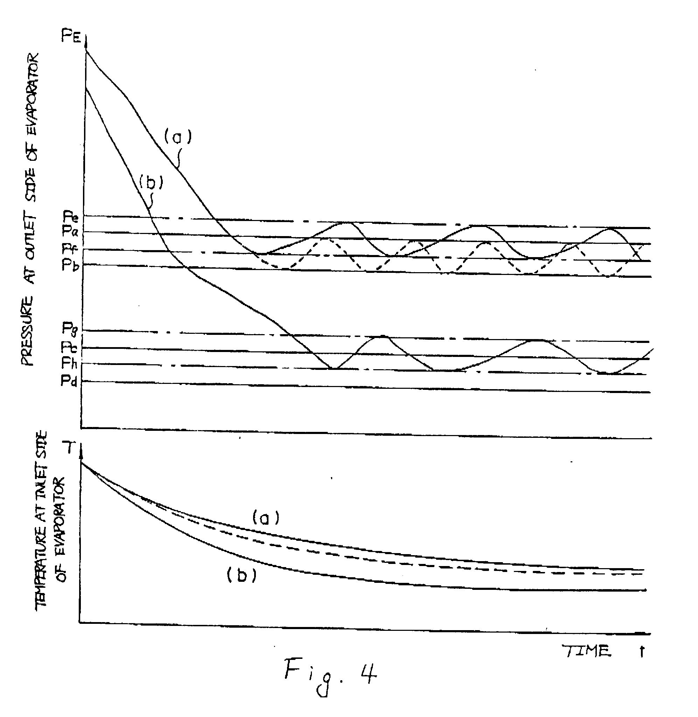

Referring to Fig. 2, a flow chart with respect to the operation of a control system in accordance with one embodiment of this invention is shown. In this embodiment, second range B of predetermined values Pe - Ph is predetermined to be mutually higher than first range A of predetermined values Pa - Pd as shown in Fig. 3 and 4. When the air conditioning system is turned on in step 30, compressor 2 is operated at a predetermined small capacity in step 31. After the air conditioning system is operated for a predetermined time t1 at the small capacity in step 32, the capacity of compressor 2 is changed to a larger capacity in step 33. The number n is predetermined one in step 34. After the air conditioning system is operated for a predetermined time "n" at a predetermined large capacity in step 35, refrigerant pressure PE at the outlet side of evaporator 6 is detected several times by pressure sensor 13 during predetermined time range in step 36. The average of refrigerant pressure PE which is detected at several times is then calculated and memorized as PE1 in step 36. After a predetermined time (n+1) ta is passed from starting of the air conditioning system in step 37, refrigerant pressure PE is detected several times again by pressure sensor 13 during predetermined time range several times again in step 38. The average of refrigerant pressure PE which is detected at several times is also calculated and memorized as PE2 in step 38. The detected result pressure PE1 is compared with pressure PE2 in step 39. If pressure PE1 is higher than pressure PE2, a pressure changing ratio P/t is calculated based on the above two pressure values PE1 and PE2 in step 40. Otherwise, a signal is sent from 39 to 36. In step 41, pressure PEn is compared with a predetermined pressure PO, which is higher than first predetermined value Pe in the second range B. If predetermined pressure PO is higher than pressure PEn, pressure changing ratio P/t is compared with a predetermined pressure changing ratio in step 42. Otherwise, a signal is output form step 41 to 43 and the number one is added to an original number in step 43. A signal is output from step 43 to 37 to calculate a next pressure changing ratio P/t, and such a calculation in relation to a pressure changing ratio P/t is repeated every ta second until at least pressure PEn is the below predetermined pressure PO. In step 40, if pressure changing ratio P/t which is previously calculated is deleted, the only newest value of pressure changing ratio P/t is memorized. If pressure changing ratio P/t is below predetermined pressure changing ratio in step 42, first range A of predetermined values Pa - Pd is selected as a predetermined pressure. Otherwise, if pressure changing ratio P/t is iver the predeterming pressure changing ratio , second range B of predetermined values Pe - Ph is selected as a predetermined pressure. After either first range A or second range B is selected, refrigerant pressure PE is compared with second predetermined pressure P2, that is, second predetermined value Pb or Pf, in step 44. If refrigerant pressure PE is below second predetermined pressure P2, the capacity of compressor 2 is changed to a small capacity ins step 45. Otherwise, a signal is input into step 44 again, and the operation of step 44 is repeated until refrigerant pressure PE is below second predetermined pressure P2. In step 46, refrigerant pressure PE is compared with first predetermined pressure P1, that is, first predetermined value Pa or Pe. If refrigerant pressure PE is higher than first predetermined pressure P1, the capacity of compressor 2 is changed into a large capacity in step 47. Otherwise, refrigerant pressure PE is compared with fourth predetermined pressure P4, that is, fourth predetermined value Pd or Ph in step 48. If refrigerant pressure PE is higher than fourth predetermined pressure P4, a signal is output from step 48 to 46 to compare refrigerant pressure PE with first predetermined pressure P1 again. Otherwise, a signal is output from step 48 to 49, and electromagnetic clutch 14 is turned off in step 49. Refrigerant pressure PE is compared with third predetermined pressure P3, that is, third predetermined value Pc or Pg in step 50. If refrigerant pressure PE is higher than third predetermined pressure P3, electromagnetic clutch 14 is turned on in step 51, and thereafter a signal is output from step 51 to 46. Otherwise, a signal is input to step 50 again and the operation is repeated until refrigerant pressure PE is higher than third predetermined pressure P3.

With reference to Fig. 3, a graph illustrating the change of pressure on evaporator and temperature of air in the evaporator under a high air conditioning load condition and normal vehicle speed is shown. As mentioned above, second range B of predetermined values Pe - Ph is predetermined to be higher than the first range A of predetermined values Pa - Pd. Since the surrounding is under the conditions of a high air conditioning load and normal vehicle speed, the second range A is selected to cool the air more quickly. After compressor 2 is started, the temperature of the air in the compartment of the vehicle gradually decreases. Refrigerant pressure PE at the outlet of evaporator 6 gradually decreases with followed the change of air temperature. When refrigerant pressure PE decreases below second predetermined value Pb, the capacity of compressor 2 is changed to a small capacity of operation of capacity changing mechanism 7. Thereafter, since the air conditioning load is high, the capacity of compressor 2 is insufficient to the high air conditioning load. Refrigerant pressure PE thus gradually increases with followed the increasing of air temperature. When refrigerant pressure PE reaches first predetermined value Pa, the capacity of compressor 2 is changed to a large capacity again, and refrigerant pressure PE gradually decreases with followed the decreasing of air temperature. If the surrounding conditions and the rotational speed of compressor 2 is not varied extremely, the above control operation of control device 8 is repeated.

Referring to Fig. 4, a graph illustrating the change of temperature and pressure on the evaporator under a normal air conditioning load and a plural vehicle speeds; curve (a) shows the changing curve under low vehicle speed and curve (b) shows the changing curve under high vehicle speed. Since pressure changing ratio P/t with respect to curves (a) and (b) is larger than predetermined pressure changing ratio , second range B of predetermined values Pe - Ph is selected as a predetermined pressure. With reference to curve (a), since the rotational speed of compressor 2 is low, the capacity of compressor 2 is insufficient to the normal air conditioning load. However, refrigerant pressure PE gradually decreases with followed the changing of air temperature although the decrease speed of the refrigerant pressure is slow as compared with curve (b). If refrigerant pressure PE decreases and below second predetermined value Pf, the capacity of compressor 2 is changed to a small capacity. Refrigerant pressure PE thus gradually increases with following the changing of air temperature. If refrigerant pressure PE reaches first predetermined value Pe, the capacity of compressor 2 is changed to a large capacity again, and refrigerant pressure PE gradually decreases with followed the changing of air temperature. If the surrounding conditions and the rotational speed of compressor 2 is not varied extremely, the above operation of compressor 2 is repeated. Under the same conditions as mentioned above, if first range A of predetermined values Pa -Pd is selected a predetermined pressure, which is below second range B of predetermined values Pe - Ph, the cycling period of changing capacity of compressor 2 becomes short as shown by a dotted curve as compared with a solid curve. That is, it means that the frequency of capacity changing becomes high. Therefore, under the above surrounding conditions, the frequency of capacity changing can be reduce by selecting second range B of predetermined values Pe - Ph.

With reference to curve (b), since the rotational speed of compressor 2 is high, refrigerant pressure PE rapidly decreases with followes the changing of air temperature and reaches second predetermined value Pf soon. The capacity of compressor 2 is changed to a small capacity at second predetermined value Pf. However, since compressor 2 is driven at high speed, the capacity of compressor 2 becomes excess to normal air conditioning load yet. Therefore, refrigerant pressure PE continuously decreases until fourth predetermined value Ph. Electromagnetic clutch 14 is turned off at fourth predetermined value Ph to prevent frosting on evaporator 6. Thereafter, refrigerant pressure PE gradually increases with the air temperature. If refrigerant pressure PE becomes higher than third predetermined value Pg, electromagnetic clutch 14 is turned on, and compressor 2 is operated at a small capacity again. This control operation of control device 8 is repeated between third predetermined value Pg and fourth predetermined value Ph.

In the above embodiment, the preferred predetermined pressure values are selected in accordance with the newest pressure changing ratio P/t just before refrigerant pressure PE reaches predetermined pressure PO. Similarly, predetermined pressure values can be selected by using the average of pressure changing ratio until refrigerant pressure PE reaches predetermined pressure PO since starting of compressor 2.

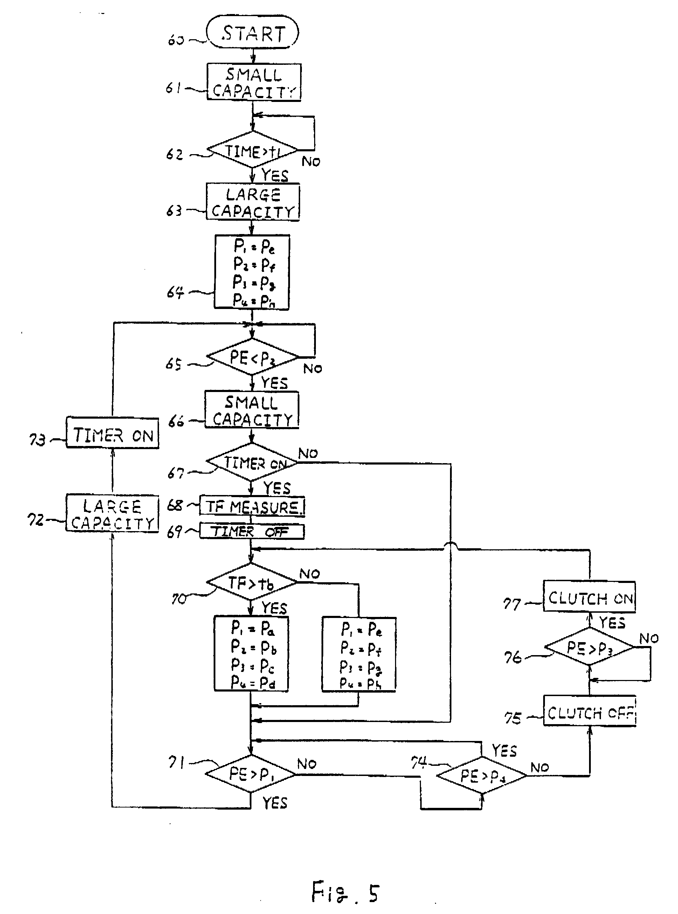

With reference to Fig. 5, a flow chart with respect to the operation of a control system in accordance with another embodiment of this invention is shown, When air conditioning system is turned on in step 60, compressor 2 is operated at a predetermined small capcity in step 61. After the air conditioning system is operated for a predetermined time t1 at the small capacity is step 62, the capacity of compressor 2 is changed to a large capacity in step 63. In step 64, first predetermined pressure P1, second predetermined pressure P2, third predetermined pressure P3 and fourth predetermined pressure P4 are set as first predetermined value Pe, second predetermined value Pf, third predetermined value Pg and fourth predetermined value Ph in second range B , respectively. Refrigerant pressure PE at the outlet side of evaporator 6 is compared with second predetermined value Pf in step 65. If refrigerant pressure PE is below predetermined value Pf, the capacity of compressor 2 is changed to a small capacity in step 66. Otherwise, it is repeated that refrigerant pressure PE is compared with second predetermined pressure P2 until refrigerant pressure PE is below second predetermined value P2. In step 67, it is detected whether a timer is turned on or off. If the timer is turned on in step 67, time TF, for which compressor 2 is operated at a large capacity, is measured in step 68. Otherwise, a signal is output from step 67 to 71. After the timer is turned off in step 69, measured time TF is compared with a predetermined time tb in step 70. If time TF is greater than predetermined time tb, first range A of predetermined values Pa - Pd is selected as a predetermined pressure. Otherwise, second range B of predetermined values Pe - Ph is selected as a predetermined if time TF is shorter than predetermined time tb. Refrigerant pressure PE is compared with first predetermined pressure P1, that is, first predetermined value Pa or Pe in step 71. If refrigerant pressure PE is higher than first predetermined pressure P1, the capacity of compressor 2 is changed to a large capacity in step 72 and a timer is turned on in step 73, then a signal is output from step 73 to 65. Otherwise, refrigerant pressure PE is compared with fourth predetermined pressure P4, that is, fourth predetermined value Pd or Ph in step 74. If refrigerant pressure PE is higher than fourth predetermined pressure P4, a signal is sent from step 74 to 71. Otherwise, electromagnetic clutch 14 is turned off in step 75 and refrigerant pressure PE is compared with third predetermined pressure P3, that is, third predetermined value Pc or Pg in step 76. If refrigerant pressure PE is higher than third predetermined pressure P3, electromagnetic clutch 14 is turned on in step 77, and then a signal is output from step 77 to 70. Otherwise, a signal is returned to the input of step 76, and the control operation of step 76 is repeated until refrigerant pressure PE is higher than third predetermined pressure P3.

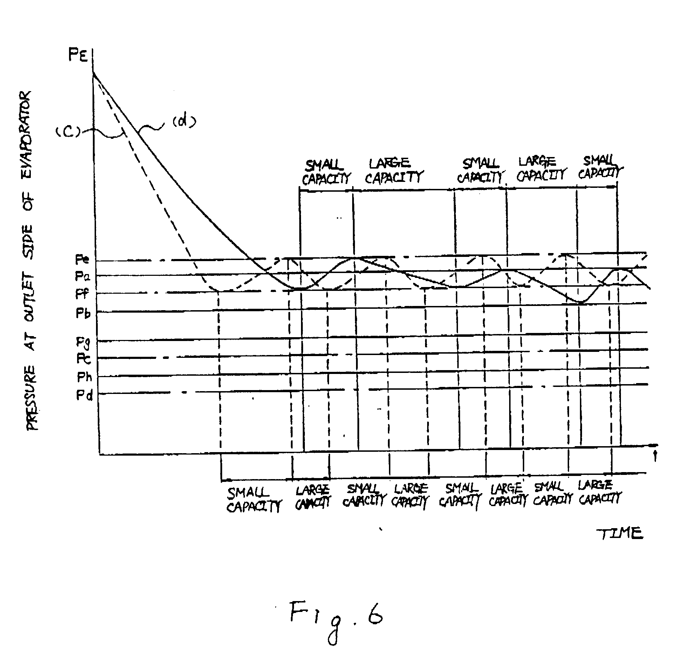

Referring to Fig. 6, a graph illustrating the change of pressure on evaporator under a plural air conditioning loads condition and a normal vehicle speed is shown. Curve (c) shows the changing curve under low air conditning load and curve (d) shows the changing curve under high air conditioning load. With reference to curve (c), after the air conditioning system is turned on, refrigerant pressure PE gradually decreases with followed the changing of air temperature. If the air conditioning load is low, time TF, for which compressor 2 is operated at a large capacity, does not become greater than predetermined time tb. Therefore, predetermined pressures are maintained to be second range B of predetermined values Pe - Ph as predetermined on the early step. Contrarily, referring to curve (d), after the air conditioning system is turned on, refrigerant pressure PE decreases more gently as compared with curve (c). Since the air conditioning load is high, time TF, for which compressor 2 is operated at large capacity, becomes greater than predetermined time tb. Therefore, the predetermined pressures are changed to first range A of predetermined values Pa - Pd. Thereafter, when time TF becomes less than predetermined time tb, the predetermined pressure is changed to second range B of predetermined values Pe - Ph again.

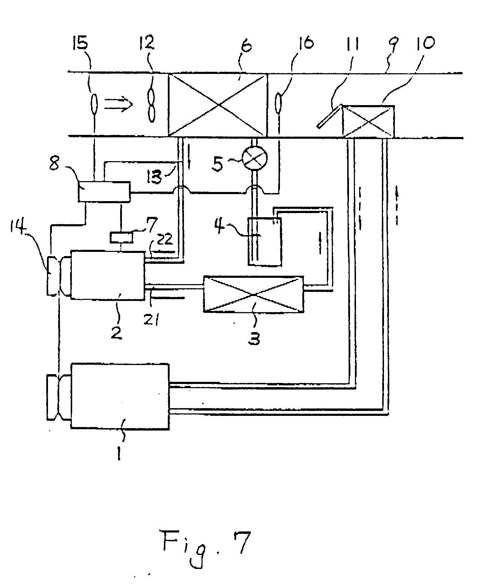

Referring to Fig. 7, there is shown an automotive air conditioning system in accordance with a further embodiment of this invention. The same construction of this automotive air conditioning system as shown in Fig. 1 is accorded the same numarals and the description of such a construction is omitted to simplify the present specification. In addition of pressure sensor 13, temperature sensors 15 and 16 to detect the inlet and outlet air temperatures are connected to control device 8 each of which is disposed at the inlet and outlet side of evaporator 6. Control device 8 controls capacity changing mechanism 7 based on the detected results.

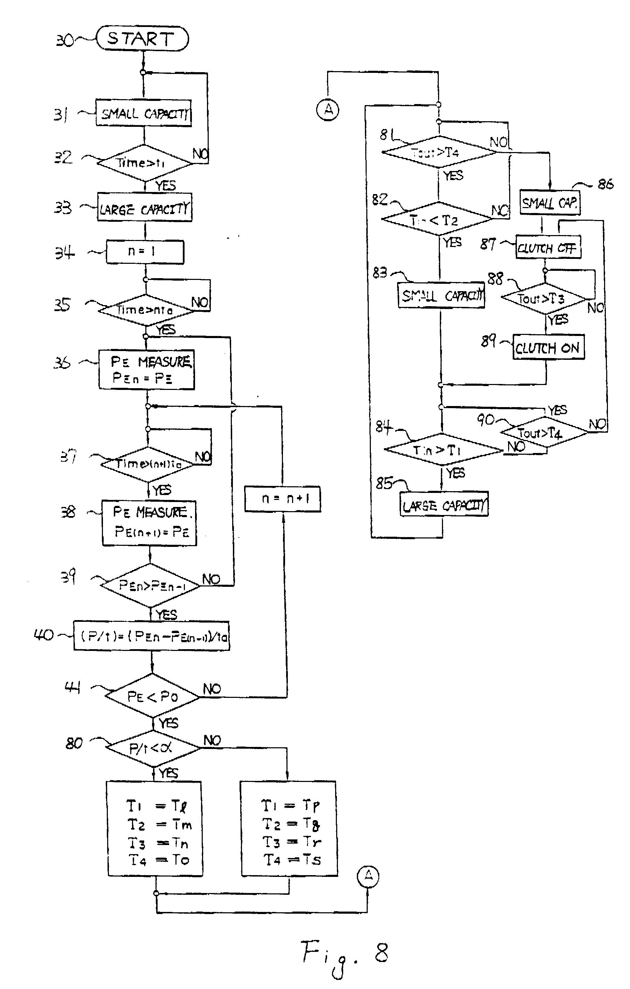

With reference to Fig. 8, a flow chart with respect to the operation of a control system in accordance with a further embodiment of this invention is shown. Since the operation of control device 8 is the same as the flow chart shown in Fig. 2 from step 30 to 41, the same numarals are accorded on each step and the description of the steps are omitted to simplify the specification.

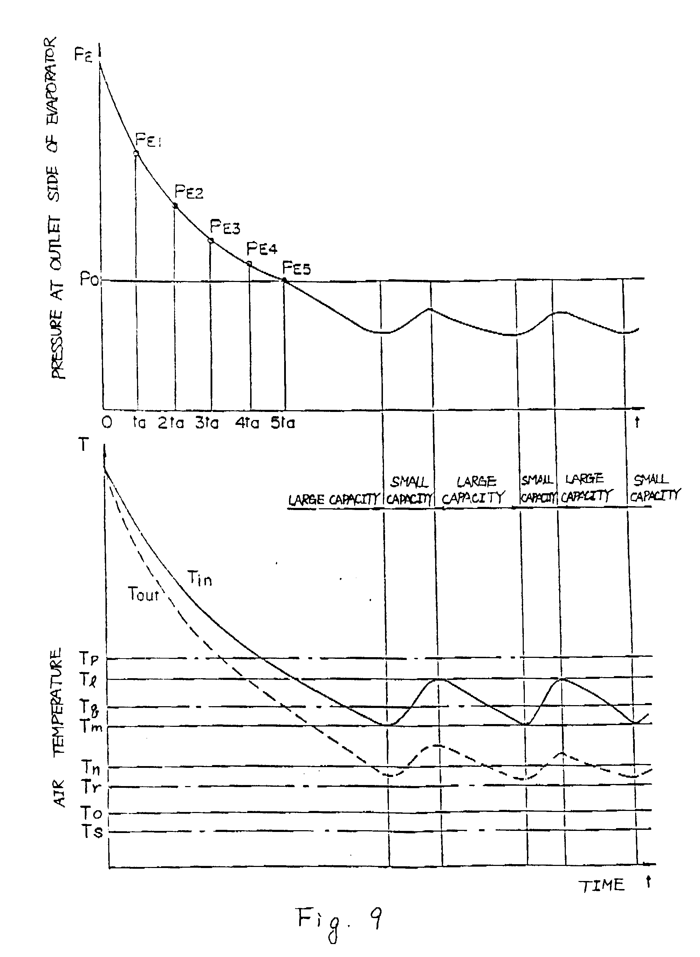

In step 80, pressure changing ratio P/t is compared with a predetermined pressure changing ratio α. Predetermined values Tp and Tr in fourth range D of as first and second predetermined temperatures are predetermined to be mutually higher than predetermined values Tl - Tm and predetermined values Tn and To in third range C as third and fourth predetermined temperatures is predetermined to be mutually higher than predetermined values Tr and Ts in fourth range D shown in Fig. 9,10 and 11. If pressure changing ratio P/t is below predetermined pressure changes ratio α, since the air conditioning load is high, third range C of predetermined values Tl - To is selected as a predetermined temperature; first and second predetermined values Tl and Tm are selected as first and second predetermined temperatures T1 and T2 so that compressor 2 can be maintained longer to be operated at a large capacity, and third and fourth predetermined values Tn and To are selected as third and fourth predetermined temperatures T3 and T4 to prevent frosting on evaporator 6. Otherwise, since the air conditioning load is low, fourth range D of predetermined values Tp - Ts is selected as a predetermined temperature; first and second predetermined values Tp and Tq are selected as first and second predetermined temperatures T1 and T2 so that it can be shortened for compressor 2 to be oprated at large capacity, and third and fourth predetermined values Tr and Ts are selected as third and fourth predetermined temperatures T3 and T4 so that it can be maintained longer for compressor 2 to be operated at a small capacity.

Air temperature Tout which is detected at the outlet side of evaporator 6 is compared with fourth predetermined temperature T4, that is, fourth predetermined value To or Ts in step 81. If air temperature Tout is high than fourth predetermined temperature T4, air temperature Tin, which is detected at the inlet side of evaporator 6, is compared with second predetermined temperature T2, that is, second predetermined value Tm or Tq in step 82. If air temperature Tin is below second predetermined temperature T2, the capacity of compressor 2 is changed to a small capacity in step 83. Otherwise, a signal is output from step 82 to 81. Air temperature Tin is compared with first predetermined temperature T1, that is, first predetermined value Tl to Tp in step 84. If air temperature Tin is higher than first predetermined temperature T1, the capacity of compressor 2 is changed into a large capacity in step 85, and thereafter a signal is output form 85 to 81.

In step 81, if air temperature Tout is below fourth predetermined temperature T4, the capacity of compressor 2 is changed to a small capacity in step 86 and electromagnetic clutch 14 is turned off in step 87. Thereafter, air temperature Tout is compared with third predetermined temperature T3, that is, third predetermined value Tn or Tr in step 88. If air temperature Tout is higher than third predetermined temperature T3, electromagnetic clutch 14 is turned on in step 89 and then a signal is sent from step 89 to 84. Otherwise, a signal is returned to an input of step 88. In step 84, if air temperature Tin is below first predetermined temperature T1, air temperature Tout is compared with fourth predetermined temperature T4 in step 90. If air temperature Tout is higher than fourth predetermined temperature T4, a signal is output from step 90 to 84. Otherwise, a signal is output from step 90 to 87, thus electromagnetic clutch 14 is turned off in step 87.

With reference to Fig. 9, a graph illustrating changing of pressure and temperature on evaporator under a high air conditioning load and normal speed is shown. The operation of control device 8 until steps 41 from 30 is the same as shown in Fig. 2. Since pressure changing ratio P/t in the high air conditioning load is below predetermined pressure changing ratio α , third range C of predetermined values Tl - To is predetermined as a predetermined temperature. After the air conditioning system is turned on, the air temperature in a compartment of a vehicle gradually decreases. When air temperature Tin reaches second predetermined temperature T2, that is, second predetermined value Tm, the capacity of compressor 2 is changed to a small capacity. In this condition, since the air conditioning capacity of compressor 2 is less than the air conditioning load, air temperature Tin gradually increases. If air temperature Tin attains first predetermined temperature T1, that is, first predetermined value Tl, the capacity of compressor 2 is changed into a large capacity. Since air conditioning capacity in large capacity of compressor 2 is greater than the air conditioning load, air temperature Tin gradually decreases again. The above control operation of control device 8 is repeated.

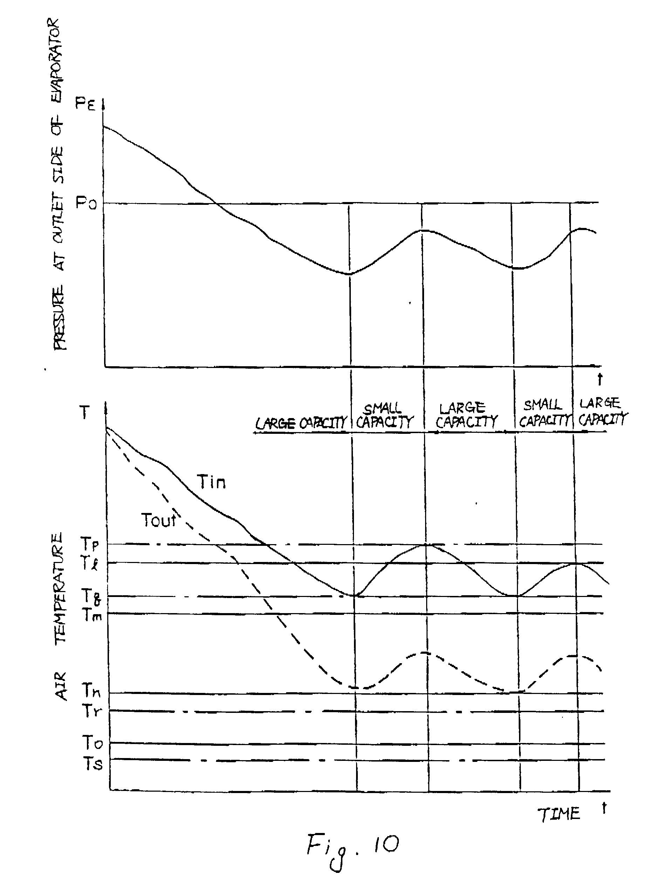

With reference to Fig. 10, a graph illustrating the changing of temperature and pressure on evaporator under middle air conditioning load condition and low vehicle speed is show. In this embodiment, since pressure changing ratio P/t is higher than predetermined pressure changing ratio α, fourth range D of predetermined values Tp - Ts is predetermined as a predetermined temperature. After the air conditioning system is turned on, the air temperature in the compartment of the vehicle gradually decreases. Air temperature Tin also decreases with the air temperature in the compartment. If air temperature Tin reaches second predetermined temperature T2, that is, second predetermined value Tq, the capacity of compressor 2 is changed to a small capacity. Although air conditioning load is middle, since vehicle speed is low, the air conditioning capacity of compressor 2 is insufficient to the air conditioning load. Therefore, air temperature Tin gradually increases. Thereafter, when air temperature Tin attains first predetermined temperature T1, that is, first predetermined value Tp, the capacity of compressor 2 is changed into a large capacity, thereby decreasing air temperature Tin again. The above control operation of control device 8 is repeated if the outside conditions are not varied extremely.

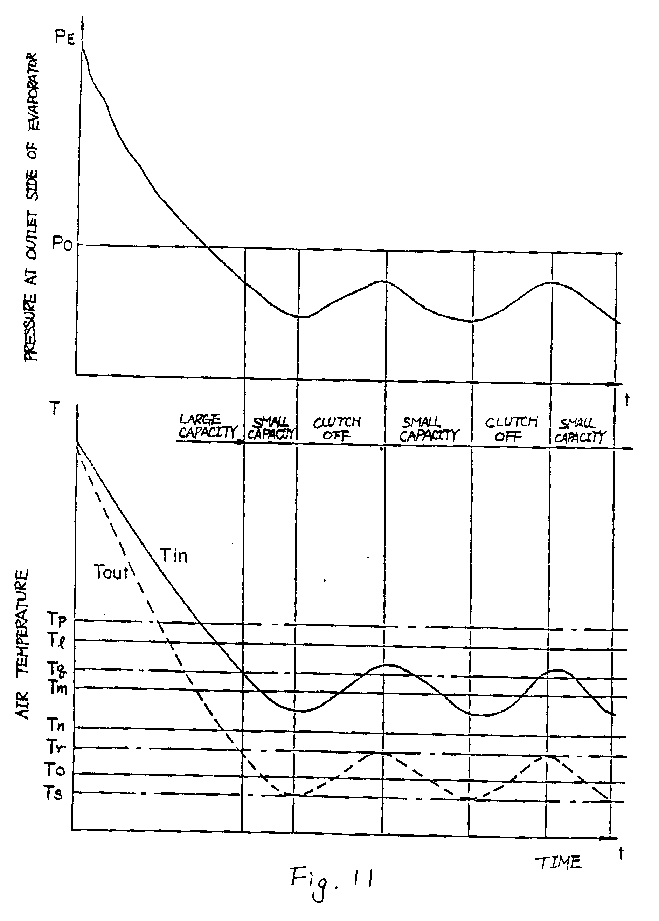

With reference to Fig. 11, a graph illustrating the changing of temperature and pressure on evaporator under a middle air conditioning load and high vehicle speed is shown. Since pressure changing ratio P/t is higher than predetermined pressure changing ratio α, fourth range D of predetermined values Tp - Ts is selected as a predetermined temperature. After the air conditioning system is turned on, the air temperature in the compartment of the vehicle gradually decreases. If air temperature Tin reaches second predetermined temperature T2, that is, second predetermined value Tq, the capacity of compressor 2 is changed to a small capacity. However, since compressor 2 is driven at high speed, the air conditioning capacity of compressor 2 is still greater than the middle air conditioning load. Therefore, air temperature Tin further decreases continuously. Thereafter, if air temperature Tout reaches fourth predetermined temperature T4, that is, fourth predetermined value Ts, electromagnetic clutch 14 is turned off to prevent frosting on evaporator 6. Thereafter, air temperature Tout gradually increases. If air temperature Tout reaches third predetermined temperature T3, that is, third predetermined value Tr, electromagnetic clutch 14 is turned on, thereby compressor 2 is driven at a small capacity again. The capacity control of control device 8 is repeated if the outside conditions are not varied extremely.

Preferably, the said control means is a microprocessor.

## Claims

1. A device for controlling the capacity of a variable compressor (2) having an evaporator (6), an electromagnetic clutch (14) and compressor capacity changing means (7), said device comprising:
pressure measure means (13) disposed on a conduit connecting said evaporator (6) and said compressor (2) for detecting the refrigerant pressure at an outlet side of said evaporator; and
control means (8) for controlling said electromagnetic clutch (14) and said capacity changing means (7), said control means including
first comparison means (39) for comparing a first refrigerant pressure detected by said pressure measure means (13) with a second refrigerant pressure and providing a first control signal when said first refrigerant pressure is higher than said second refrigerant pressure, wherein a pressure changing ratio is calculated based on the difference between said first and second refrigerant pressures and the presence of said first control signal,
second comparison means (41) for comparing one of said refrigerant pressures with a predetermined pressure and providing a second control signal when said one of said refrigerant pressures is below said predetermined pressure, third comparison means (42) for comparing said calculated pressure changing ratio with a predetermined pressure changing ratio in response to the comparison by said second comparison means (41) and the presence of said second control signal, said third comparison means providing a third control signal when said calculated pressure changing ratio is below said predetermined pressure changing ratio, wherein in response to said third control signal first, second, third and fourth predetermined pressures are set equal to respective values of a first range of predetermined values, and in the absence of said third control signal, said first, second, third and fourth predetermined pressures are set equal to a second range of predetermined values,
fourth comparison means (44) for comparing one of said refrigerant pressures with said second predetermined pressure and providing a fourth control signal when said one of said refrigerant pressures is below said second predetermined pressure, wherein said capacity changing means (7) changes the capacity of said compressor to a small capacity in response to said fourth control signal,
fifth comparison means (46) for comparing said refrigerant pressure with said first predetermined pressure and providing a fifth control signal when said one of said refrigerant pressures is higher than said first predetermined pressure, wherein said capacity changing means (4) changes the capacity of said compressor (2) to a large capacity in response to said fifth control signal,
sixth comparison means (48) for comparing one of said refrigerant pressures with a fourth predetermined pressure in response to the comparison by said fifth comparison means (46) and the absence of said fifth control signal, said sixth comparison means providing a sixth control signal when said one of said refrigerant pressures is higher than said fourth predetermined pressure, wherein said electromagnetic clutch (14) is turned off in response to the absence of said sixth control signal,
seventh comparison means (50) for comparing one of said refrigerant pressures with said third predetermined pressure and providing a seventh control signal when said one of said refrigerant pressures is higher than said third predetermined pressure, wherein said electromagnetic clutch (14) is turned on in response to said seventh control signal.

2. A device for controlling the capacity of a variable compressor (2) having an evaporator (6), an electromagnetic clutch (14) and compressor capacity changing means (7), said device comprising:
pressure measure means (13) disposed on a conduit connecting said evaporator (6) and said compressor (2) for detecting the refrigerant pressure at an outlet side of said evaporator; and
control means (8) for controlling said electromagnetic clutch (14) and said capacity changing means (7), said control means including
predetermination means for initially setting first, second, third and fourth predetermined pressures equal to respective values of a second range of predetermined values,
first comparison means (65) for comparing said detected refrigerant pressure with said second predetermined pressure and providing a first control signal when said refrigerant pressure is below said second predetermined pressure, wherein said capacity changing means (7) changes the capacity of said compressor to a small capacity in response to said first control signal,
second comparison means (67) for detecting whether a timer is turned of or off measuring a time for which said compressor is operated at a large capacity in response to the comparison by said first comparison means (65) and the presence of said first control signal, said second comparison means providing a second control signal when said timer is turned on,
third comparison means (70) for comparing said time with a predetermined time in response to the comparison by said second comparison means (67) and the presence of said second control signal, and providing a third control signl when said time is greater than said predetermined time, wherein in response to said third control signal said first, second, third and fourth predetermined pressures are set equal to respective values of a first range of predetermined values, and in the absence of said third control signal said first, second, third and fourth predetermined pressures are maintained equal to respective values of said second range of predetermined values,
fourth comparison means (71) for comparing said detected refrigerant pressure with said first predetermined pressure and providing a fourth control signal when said detected refrigerant pressure is higher than said first predetermined pressure, wherein said capacity changing means (7) changes the capacity of said compressor to a large capacity in response to said fourth control signal,
fifth comparison means (74) for comparing said detected refrigerant pressure with a fourth predetermined pressure in response to the comparison by said fourth comparison means and the absence of said fourth control signal, said fifth comparison means providing a fifth control signal when said refrigerant pressure is higher than said fourth predetermined pressure, wherein said electromagnetic clutch (14) is turned off in response to the absence of said fifth control signal, sixth comparison means (76) for comparing said detected refrigerant pressure with said third predetermined pressure and providing sixth control signal when said refrigerant pressure is higher than said third predetermined pressure, wherein said electromagnetic clutch (14) is turned on in response to said sixth control signal.

3. A device for controlling the capacity of a variable compressor (2) having an evaporator (6), an electromagnetic clutch (14) and compressor capacity changing means (7), said device comprising:
pressure measure means (13) disposed on a conduit connecting said evaporator (6) and said compressor (2) for detecting the refrigerant pressures at an outlet side of said evaporator, first temperature sensor means (15) disposed at the inlet side of said evaporator (6) to detect a first temperature of the air flowing into said evaporator, second temperature sensor means (16) disposed at the outlet side of said evaporator to detect a second temperature of the air flowing out of said evaporator; and
control means (8) for controlling said electromagnetic clutch (14) and said capacity changing means (7), said control means including:
first comparison means (39) for comparing a first refrigerant pressure detected by said pressure measure means (13) with a second refrigerant pressure and providing a first control signal when said first detected refrigerant pressure is higher than said second detected refrigerant pressure, wherein a pressure changing ratio is calculated based on the difference between said first and second refrigerant pressures in response to the both first comparison means and the presence of said first control signal,
second comparison means (41) for comparing one of said refrigerant pressures with a predetermined pressure and providing a second control signal when said one of said refrigerant pressures is below said predetermined pressure, third comparison means (80) for comparing said pressure changing ratio with a predetermined pressure changing ratio in response to the comparison by said second comparison means and the presence of said second control signal, said third comparison means providing a third control signal when said pressure changing ratio is below said predetermined pressure changing ratio, wherein in response to said third control signal first, second, third and fourth predetermined temperatures are set equal to respective values of a first range of predetermined values and in the absence of said third control signal said first, second, third and fourth predetermined temperatures are set to a second range of predetermined values,
fourth comparison means (81) for comparing said second temperature with said fourth predetermined temperature and providing a fourth control signal when said second temperature is higher than said fourth predetermined temperature, wherein said capacity changing means changes the capacity of said compressor to a small capacity in response to the absence of said fourth control signal, fifth comparison means (82) for comparing said first temperature with said second predetermined temperature in response to the comparison by said fourth comparison means and the presence of said fourth control signal, said fifth comparison means providing a fifth control signal when said first temperature is below said second predetermined temperature, wherein said capacity changing means changes the capacity of said compressor to a small capacity in response to said fifth control signal,
sixth comparison means (84) for comparing said first temperature with said first predetermined temperature and providing a sixth control signal when said first temperature is higher than said first predetermined temperature, wherein said capacity changing means (7) changes to a large capacity in response to said sixth control signal,
seventh comparison means (90) for comparing said second temperature with said fourth predetermined temperature in response to the comparison by said sixth comparison means and the absence of said sixth control signal, said seventh comparison means providing a seventh control signal when said second temperature is higher than said fourth predetermined temperature, wherein said electromagnetic clutch (14) is turned off in response to the absence of said seventh control signal,
eighth comparison means (88) for comparing said second temperature with said third predetermined temperature and providing an eighth control signal when said second temperature is higher than said third predetermined temperature, wherein said electromagnetic clutch (14) is turned on in response to said eighth control signal.

4. The device of one of claims 1 to 3, wherein said control device (8) controls said pressure measure means (13) to detect the refrigerant pressure at the outlet side of said evaporator (6) in response to the comparison by said first comparison means (39) and the absence of said first control signal.

5. The device of one of claims 1 to 4, wherein said control device (8) controls said pressure measure means (13) to detect said refrigerant pressure again in response to the comparison by said second comparison means (41) and the absence of said second control signal.

6. The device of one of claims 1 to 5, wherein said fourth comparison means (44) is controlled to compare said refrigerant pressure with said second predetermined pressure again in response to the comparison by said fourth comparison means (44) and the absence of said fourth control signal.

7. The device of one of claims 1 to 6, wherein said sixth comparison means (48) is controlled to compare said refrigerant pressure with said fourth predetermined pressure again in response to the comparison by said sixth comparison means (48) and the absence of said sixth control signal.

8. The device of one of claims 1 to 7, wherein said seventh comparison means (50) is controlled to compare said refrigerant pressure with said third predetermined pressure again in response to the comparison by said seventh comparison means (50) and the absence of said seventh control signal.

9. The device of one of claims 1 to 8, wherein said pressure measure means (13) detects said refrigerant pressure four through eight times for fifteen through thirty seconds and calculates the average of said refrigerant pressures.

10. The device of one of claims 1 to 9, wherein said control means (8) initially controls said capacity changing means (7) to operate said compressor at a small capacity for an initial predetermined time.

11. The device of one of claims 1 to 10, wherein said first range of predetermined values comprises first, second, third and fourth predetermined values and/or wherein said first range of predetermined values comprises another first, second, third and fourth predetermined values.

12. The device of claim 11, wherein said first predetermined value is less than said other first predetermined value and/or said other second predetermined value is less than said first predetermined value.

13. The device of claims 11 to 12, wherein said second predetermined value is less than said other second predetermined value and/or said other third predetermined value is less than said second predetermined value.

14. The device of one of claims 11 to 13, wherein said third predetermined value is less than said other third predetermined value and/or said other fourth predetermined value is less than said third predetermined value.

15. The device of one of claims 11 to 14, wherein said fourth predetermined value is less than said another fourth predetermined value.

16. The device of one of claims 11 to 15, wherein said first predetermined value is less than said predetermined pressure.

17. The device of one of claims 1 to 16, wherein said first comparison means (39) is controlled to compare said refrigerant pressure with said second predetermined pressure in response to the comparison by said first comparison means (39) and the absence of said first control signal.

18. The device of one of claims 1 to 17, wherein said fourth comparison means (44) is controlled to compare said refrigerant pressure with said first predetermined pressure in response to the comparison by said second comparison means (41) and the absence of said second control signal.

19. The device of one of claims 1 to 18, wherein said fourth comparison means (44) is controlled to compare said refrigerant pressure with said first predetermined pressure again and/or in response to the comparison by said sixth comparison means (48) and the absence of said sixth control signal said sixth comparison means (48) is controlled to compare said refrigerant pressure with said third predetermined pressure in response to the comparison by said fifth comparison means (46) and the presence of said fifth control signal.

20. The device of one of claims 1 to 19, wherein said control means (8) initially controls said capacity changing means (7) to operate said compressor at a small capacity for an initial predetermined time.

21. The device of one of claims 2 to 20, wherein said fourth comparison means (44) is controlled to compare said second temperature with said fourth predetermined temperature again in response to the comparison by said fifth comparison means (46) and the absence of said fifth control signal.

22. The device of one of claims 2 to 21, wherein said sixth comparison means (48) is controlled to compare said first temperature with said first predetermined temperature again and/or wherein in response to the comparison by said eighth comparison means (88) and the absence of said eighth control signal said eighth comparison means (88) is controlled to compare said second temperature with said third predetermined temperature again in response to the comparison by said seventh comparison means (90) and the presence of said seventh control signal.

23. The device of one of claims 2 to 22, wherein said second range of predetermined values comprises another first, second, third and fourth predetermined values.

24. The device of one of claims 2 to 23, wherein said third predetermined value is less than said second predetermined value and/or wherein said another predetermined third predetermined value is less than said third predetermined value and/or wherein said fourth predetermined value is less than said another third predetermined value and/or wherein said another fourth predetermined value is less than said fourth predetermined value.

## Patentansprüche

1. Vorrichtung zum Steuern der Kapazität eines variablen Kompressors (2) mit einem Verdampfer (6), einer elektromagnetischen Kupplung (14) und einem Kompressorkapazitätsänderungsmittel (7), wobei die Vorrichtung aufweist:
Druckmeßmittel (13), das in einer den Verdampfer (6) und den Kompressor (2) verbindenden Leitung vorgesehen ist, zum Erfassen des Kühlmitteldruckes an einer Auslaßseite des Verdampfers; und Steuermittel (8) zum Steuern der elektromagnetischen Kupplung (14) und des Kapazitätsänderungsmittels (7), wobei das Steuermittel aufweist
erstes Vergleichsmittel (39) zum Vergleichen eines ersten durch das Druckmeßmittel (13) erfaßten Kühlmitteldruckes mit einem zweiten Kühlmitteldruck und Vorsehen eines ersten Steuersignales, wenn der erste Kühlmitteldruck höher als der zweite Kühlmitteldruck ist, wobei ein Druckänderungsverhältnis auf der Grundlage der Differenz zwischen dem ersten und zweiten Kühlmitteldruck und der Gegenwart des ersten Steuersignales berechnet wird,
zweite Vergleichsmittel (41) zum Vergleichen einer der Kühlmitteldrucke mit einem vorbestimmten Druck und Vorsehen eines zweiten Steuersignales, wenn der eine der Kühlmitteldrucke unterhalb von dem vorbestimmten Druck liegt,
drittes Vergleichsmittel (42) zum Vergleichen des berechneten Druckänderungsverhältnisses mit einem vorbestimmten Druckänderungsverhältnisses als Reaktion auf den Vergleich durch das zweite Vergleichsmittel (41) und die Gegenwart des zweiten Steuersignales, wobei das dritte Vergleichsmittel ein drittes Steuersignal vorsieht, wenn das berechnete Druckänderungsverhältnis unterhalb von dem vorbestimmten Druckänderungsverhältnis liegt, wobei als Reaktion auf das dritte Steuersignal der erste, zweite, dritte und vierte vorbestimmte Druck gleich entsprechenden Werten eines Bereiches von vorbestimmten Werten gesetzt werden, und in der Abwesenheit des dritten Steuersignales der erste, zweite, dritte und vierte vorbestimmte Druck gleich einem zweiten Bereich von vorbestimmten Werten gesetzt werden,
viertes Vergleichsmittel (44) zum Vergleichen von einem der Kühlmitteldrucke mit dem zweiten vorbestimmten Druck und Vorsehen eines vierten Steuersignales, wenn der eine der Kühldrucke unter dem zweiten vorbestimmten Druck liegt, wobei das Kapazitätsänderungsmittel (7) die Kapazität des Kompressors zu einer kleinen Kapazität als Reaktion auf das vierte Steuersignal ändert,
fünftes Vergleichsmittel (46) zum Vergleichen des Kühlmitteldruckes mit dem ersten vorbestimmten Druck und Vorsehen eines fünften Steuersignales, wenn der eine der Kühlmitteldrucke höher als der erste vorbestimmte Druck ist, wobei das Kapazitätsänderungsmittel (7) die Kapazität des Kompressors (2) zu einer großen Kapazität als Reaktion auf das fünfte Steuersignal ändert,
sechstes Vergleichsmittel (48) zum Vergleichen von einem der Kühlmittedrucke mit einem vierten vorbestimmten Druck als Reaktion auf den Vergleich durch das fünfte Vergleichsmittel (46) und die Abwesenheit des fünften Steuersignales, wobei das sechste Vergleichsmittel ein sechstes Steuersignal vorsieht, wenn der eine der Kühlmitteldrucke höher als der vierte vorbestimmte Druck ist, wobei die elektromagnetische Kupplung (14) als Reaktion auf die Abwesenheit des sechsten Steuersignales abgeschaltet wird,
siebentes Vergleichsmittel (50) zum Vergleichen von einem der Kühlmitteldrucke mit dem dritten vorbestimmten Druck und Vorsehen eines siebenten Steuersignales, wenn der eine der Kühlmitteldrucke höher als der dritte vorbestimmte Druck ist, wobei die elektromagnetische Kupplung (14) als Reaktion auf das siebente Steuersignal eingeschaltet wird.

2. Vorrichtung zum Steuern der Kapazität eines variablen Kompressors (2) mit einem Verdampfer (6), einer elektromagnetischen Kupplung (14) und einem Kompressorkapazitätsänderungsmittel (7), wobei die Vorrichtung aufweist:
Druckmeßmittel (13), das einer den Verdampfer (6) mit dem Kompressor (2) verbindenden Leitung vorgesehen ist, zum Erfassen des Kühlmitteldruckes an einer Auslaßseite des Verdampfers; und
Steuermittel (8) zum Steuern der elektromagnetischen Kupplung (14) und des Kapazitätsänderungsmittel (7), wobei das Steuermittel aufweist
Vorbestimmungsmittel zum anfänglichen Setzen eines ersten, zweiten, dritten und vierten vorbestimmten Druckes gleich entsprechenden Werten eines zweiten Bereiches von vorbestimmten Werten,
erstes Vergleichsmittel (65) zum Vergleichen des erfaßten Kühlmitteldruckes mit dem zweiten vorbestimmten Druck und Vorsehen eines ersten Steuersignales, wenn der Kühlmitteldruck unterhalb dem zweiten vorbestimmten Druck ist, wobei das Kapazitätsänderungsmittel (7) die Kapazität des Kompressors zu einer kleinen Kapazität als Reaktion auf das erste Steuersignal ändert,
zweites Vergleichsmittel (67) zum Erfassen, ob ein Zeitgeber ein- oder ausgeschaltet ist als Reaktion auf den Vergleich durch das erste Vergleichsmittel (65) und die Gegenwart des ersten Steuersignales, wobei das zweite Vergleichsmittel ein zweites Steuersignal vorsieht, wenn der Zeitgeber eingeschaltet ist,
drittes Vergleichsmittel (70) zum Vergleichen der Zeit mit einer vorbestimmten Zeit als Reaktion auf den Vergleich durch das zweite Vergleichsmittel (67) und die Gegenwart des zweiten Steuersignales und Vorsehen eines dritten Steuersignales, wenn die Zeit größer als die vorbestimmte Zeit ist, wobei als Reaktion auf das dritte Steuersignal der erste, zweite, dritte und vierte vorbestimmte Druck gleich den entsprechenden Werten eines ersten Bereiches von vorbestimmten Werten gesetzt werden, und in Abwesenheit des dritten Steuersignales der erste, zweite, dritte und vierte vorbestimmte Druck gleich den entsprechenden Werten des zweiten Bereiches von vorbestimmten Werten gehalten werden,
viertes Vergleichsmittel (71) zum Vergleichen des erfaßten Kühlmitteldruckes mit dem ersten vorbestimmten Druck und Vorsehen eines vierten Steuersignales, wenn der erfaßte Kühlmitteldruck höher als der erste vorbestimmte Druck ist, wobei das Kapazitätsänderungsmittel (7) die Kapazität des Kompressors zu einer großen Kapazität als Reaktion auf das vierte Steuersignal ändert,
fünftes Vergleichsmittel (74) zum Vergleichen des erfaßten Kühlmitteldruckes mit einem vierten vorbestimmten Druck als Reaktion auf den Vergleich durch das vierte Vergleichsmittel und die Abwesenheit des vierten Steuersignales, wobei das fünfte Vergleichsmittel ein fünftes Steuersignal vorsieht, wenn der Kühlmitteldruck höher als der vierte vorbestimmte Druck ist, wobei die elektromagnetische Kupplung (14) als Reaktion auf die Abwesenheit des fünften Steuersignales abgeschaltet wird, sechstes Vergleichsmittel (76) zum Vergleichen des erfaßten Kühlmitteldruckes mit dem dritten vorbestimmten Druck und Vorsehen eines sechsten Steuersignales, wenn der Kühlmitteldruck höher als der dritte vorbestimmte Druck ist, wobei die elektromagnetische Kupplung (14) als Reaktion auf das sechste Steuersignal eingeschaltet wird.

3. Vorrichtung zum Steuern der Kapazität eines variablen Kompressors (2) mit einem Verdampfer (6), einer elektromagnetischen Kupplung (14) und einem Kompressorkapazitätsänderungsmittel (7), wobei die Vorrichtung aufweist:
Druckmeßmittel (13), das in einer den Verdampfer (6) und den Kompressor (2) verbindenden Leitung vorgesehen ist, zum Erfassen des Kühlmitteldruckes an einer Auslaßseite des Verdampfers, erstes Temperatursensormittel (15), das an der Einlaßseite des Verdampfers (6) zum Erfassen einer ersten Temperatur der in den Verdampfer fließenden Luft vorgesehen ist, zweites Temperatursensormittel (16), das an der Auslaßseite des Verdampfers zum Erfassen einer zweiten Temperatur der aus dem Verdampfer herausfließenden Luft vorgesehen ist; und
Steuermittel (8) zum Steuern der elektromagnetischen Kupplung (14) und des Kapazitätsänderungsmittels (7), wobei das Steuermittel aufweist:
erstes Vergleichsmittel (39) zum Vergleichen eines von dem Druckmeßmittel (13) erfaßten ersten Kühlmitteldruckes mit einem zweiten Kühlmitteldruck und Vorsehen eines ersten Steuersignales, wenn der erste erfaßte Kühlmitteldruck höher als der zweite erfaßte Kühlmitteldruck ist, wobei ein Druckänderungsverhältnis auf der Grundlage der Differenz zwischen dem ersten und zweiten Kühlmitteldruck als Reaktion auf sowohl das erste Vergleichsmittel als auch die Gegenwart des ersten Steuersignales berechnet wird,
zweites Vergleichsmittel (41) zum Vergleichen von einem der Kühlmitteldrucke mit einem vorbestimmten Druck und Vorsehen eines zweiten Steuersignales, wenn der eine der Kühlmitteldrucke unterhalb von dem vorbestimmten Druck liegt,
drittes Vergleichsmittel (80) zum Vergleichen des Druckänderungsverhältnisses mit einem vorbestimmten Druckänderungsverhältnis als Reaktion auf den Vergleich durch das zweite Vergleichsmittel und die Gegenwart des zweiten Steuersignales, wobei das dritte Vergleichsmittel ein drittes Steuersignal vorsieht, wenn das Druckänderungsverhältnis unterhalb von dem vorbestimmten Druckänderungsverhältnis liegt, wobei als Reaktion auf das dritte Steuersignal die erste, zweite, dritte und vierte vorbestimmte Temperatur gleich den entsprechenden Werten eines ersten Bereiches von vorbestimmten Werten gesetzt werden und als Reaktion auf das dritte Steuersignal die erste, zweite, dritte und vierte vorbestimmte Temperatur gleich einem zweiten Bereich von vorbestimmten Werten gesetzt werden,
viertes Vergleichsmittel (81) zum Vergleichen der zweiten Temperatur mit der vierten vorbestimmten Temperatur und Vorsehen eines vierten Steuersignales, wenn die zweite Temperatur höher als die vierte vorbestimmte Temperatur ist, wobei das Kapazitätsänderungsmittel die Kapazität des Kompressors zu einer kleinen Kapazität als Reaktion auf die Abwesenheit des vierten Steuersignales ändert,
fünftes Vergleichsmittel (82) zum Vergleichen der ersten Temperatur mit der zweiten vorbestimmten Temperatur als Reaktion auf den Vergleich durch das vierte Vergleichsmittel und die Gegenwart des vierten Steuersignales, wobei das fünfte Vergleichsmittel ein fünftes Steuersignal vorsieht, wenn die erste Temperatur unterhalb der zweiten vorbestimmten Temperatur liegt, wobei das Kapazitätsänderungsmittel die Kapazität des Kompressors zu einer kleinen Kapazität als Reaktion auf das fünfte Steuersignal ändert,
sechstes Vergleichsmittel (84) zum Vergleichen der ersten Temperatur mit der ersten vorbestimmten Temperatur und Vorsehen eines sechsten Steuersignales, wenn die erste Temperatur höher als die erste vorbestimmte Temperatur ist, wobei das Kapazitätsänderungsmittel (7) zu einer großen Kapazität als Reaktion auf das sechste Steuersignal ändert,
siebentes Vergleichsmittel (90) zum Vergleichen der zweiten Temperatur mit der vierten vorbestimmten Temperatur als Reaktion auf den Vergleich durch das sechste Vergleichsmittel und die Abwesenheit des sechsten Steuersignales, wobei das siebente Vergleichsmittel ein siebentes Steuersignal vorsieht, wenn die zweite Temperatur höher als die vierte vorbestimmte Temperatur ist, wobei die elektromagnetische Kupplung (14) als Reaktion auf die Abwesenheit des siebenten Steuersignales abgeschaltet wird, achtes Vergleichsmittel (88) zum Vergleichen der zweiten Temperatur mit der dritten vorbestimmten Temperatur und Vorsehen eines achten Steuersignales, wenn die zweite Temperatur höher als die dritte vorbestimmte Temperatur ist, wobei die elektromagnetische Kupplung (14) als Reaktion auf das achte Steuersignal eingeschaltet wird.

4. Vorrichtung nach einem der Ansprüche 1 bis 3, bei der die Steuervorrichtung (8) das Druckmeßmittel (13) zum Erfassen des Kühlmitteldruckes an der Auslaßseite des Verdampfers (6) als Reaktion auf den Vergleich durch das erste Vergleichsmittel (39) und die Abwesenheit des ersten Steuersignales steuert.

5. Vorrichtung nach einem der Ansprüche 1 bis 4, bei der die Steuervorrichtung (8) das Druckmeßmittel (13) zum Erfassen des Kühlmitteldruckes wieder als Reaktion auf den Vergleich durch das zweite Vergleichsmittel (41) und die Abwesenheit des zweiten Steuersignales steuert.

6. Vorrichtung nach einem der Ansprüche 1 bis 5, bei der das vierte Vergleichsmittel (44) zum Vergleichen des Kühlmitteldruckes mit dem zweiten vorbestimmten Druck wieder als Reaktion auf den Vergleich durch das vierte Vergleichsmittel (44) und die Abwesenheit des vierten Steuersignales gesteuert wird.

7. Vorrichtung nach einem der Ansprüche 1 bis 6, bei der das sechste Vergleichsmittel (48) zum Vergleichen des Kühlmitteldruckes mit dem vierten vorbestimmten Druck wieder als Reaktion auf den Vergleich durch das sechste Vergleichsmittel (48) und die Abwesenheit des sechsten Steuersignales gesteuert wird.

8. Vorrichtung nach einem der Ansprüche 1 bis 7, bei der das siebente Vergleichsmittel (50) zum Vergleichen des Kühlmitteldruckes mit dem dritten vorbestimmten Druck wieder als Reaktion auf den Vergleich durch das siebente Vergleichsmittel (50) und die Abwesenheit des siebenten Steuersignales gesteuert wird.

9. Vorrichtung nach einem der Ansprüche 1 bis 8, bei dem das Druckmeßmittel (13) den Kühlmitteldruck vier- bis achtmal während 15 bis 30 Sekunden erfaßt und den Durchschnitt der Kühlmitteldrucke berechnet.

10. Vorrichtung nach einem der Ansprüche 1 bis 9, bei der das Steuermittel (8) anfänglich das Kapazitätsänderungsmittel (7) zum Betreiben des Kompressors bei einer kleinen Kapazität während einer anfänglichen vorbestimmten Zeit steuert.

11. Vorrichtung nach einem der Ansprüche 1 bis 10, bei der der erste Bereich von vorbestimmten Werten einen ersten, zweiten, dritten und vierten vorbestimmten Wert aufweist und/oder bei der der erste Bereich von vorbestimmten Werten einen anderen ersten, zweiten, dritten und vierten vorbestimmten Wert aufweist.

12. Vorrichtung nach Anspruch 11, bei der der erste vorbestimmte Wert kleiner als der andere erste vorbestimmte Wert ist und/oder der andere zweite vorbestimmte Wert kleiner als der erste vorbestimmte Wert ist.

13. Vorrichtung nach Anspruch 11 oder 12, bei der der zweite vorbestimmte Wert kleiner als der andere zweite vorbestimmte Wert ist und/oder der andere dritte vorbestimmte Wert kleiner als der zweite vorbestimmte Wert ist.

14. Vorrichtung nach einem der Ansprüche 11 bis 13, bei der der dritte vorbestimmte Wert kleiner als der andere dritte vorbestimmte Wert ist und/oder der andere vierte vorbestimmte Wert kleiner als der dritte vorbestimmte Wert ist.

15. Vorrichtung nach einem der Ansprüche 11 bis 14, bei der der vierte vorbestimmte Wert kleiner als der andere vierte vorbestimmte Wert ist.

16. Vorrichtung nach einem der Ansprüche 1 bis 15, bei der der erste vorbestimmte Wert kleiner als der vorbestimmte Druck ist.

17. Vorrichtung nach einem der Ansprüche 1 bis 16, bei der das erste Vergleichsmittel (39) zum Vergleichen des Kühlmitteldruckes mit dem zweiten vorbestimmten Druck als Reaktion auf den Vergleich durch das erste Vergleichsmittel (39) und die Abwesenheit des ersten Steuersignales gesteuert wird.

18. Vorrichtung nach einem der Ansprüche 1 bis 17, bei der das vierte Vergleichsmittel (44) zum Vergleichen des Kühlmitteldruckes mit dem ersten vorbestimmten Druck als Reaktion auf den Vergleich durch das zweite Vergleichsmittel (41) und die Abwesenheit des zweiten Steuersignales gesteuert wird.

19. Vorrichtung nach einem der Ansprüche 1 bis 18, bei der das vierte Vergleichsmittel (44) zum Vergleichen wieder des Kühlmitteldruckes mit dem ersten vorbestimmten Druck und/oder als Reaktion auf den Vergleich durch das sechste Vergleichsmittel (48) und die Abwesenheit des sechsten Steuersignales gesteuert wird, wobei das sechste Vergleichsmittel (48) zum Vergleichen des Kühlmitteldruckes mit dem dritten vorbestimmten Druck als Reaktion auf den Vergleich durch das fünfte Vergleichsmittel (46) und die Gegenwart des fünften Steuersignales gesteuert wird.

20. Vorrichtung nach einem der Ansprüche 1 bis 19, bei der das Steuermittel (8) anfänglich das Kapazitätsänderungsmittel (7) zum Betreiben des Kompressors bei einer kleinen Kapazität für eine anfängliche vorbestimmte Zeit steuert.

21. Vorrichtung nach einem der Ansprüche 2 bis 20, bei der das vierte Vergleichsmittel (44) zum Vergleichen der zweiten Temperatur mit der vierten vorbestimmten Temperatur wieder als Reaktion auf den Vergleich durch das fünfte Vergleichsmittel (46) und die Abwesenheit des fünften Steuersignales gesteuert wird.

22. Vorrichtung nach einem der Ansprüche 2 bis 21, bei der das sechste Vergleichsmittel (48) zum Vergleichen wieder der ersten Temperatur mit der ersten vorbestimmten Temperatur gesteuert wird und/oder bei der als Reaktion auf den Vergleich durch das achte Vergleichsmittel (88) und die Abwesenheit des achten Steuersignales das achte Vergleichsmittel (88) zum Vergleichen der zweiten Temperatur wieder mit der dritten Temperatur als Reaktion auf den Vergleich durch das siebente Vergleichsmittel (90) und die Gegenwart des siebenten Steuersignales gesteuert wird.

23. Vorrichtung nach einem der Ansprüche 2 bis 22, bei der der zweite Bereich von vorbestimmten Werten einen anderen ersten, zweiten, dritten und vierten vorbestimmten Wert aufweist.

24. Vorrichtung nach einem der Ansprüche 2 bis 23, bei der der dritte vorbestimmte Wert kleiner als der zweite vorbestimmte Wert ist und/oder bei der der andere vorbestimmte dritte Wert kleiner als der dritte vorbestimmte Wert ist und/oder bei der vierte vorbestimmte Wert kleiner als der andere dritte vorbestimmte Wert ist und/oder bei der der andere vierte vorbestimmte Wert kleiner als der vierte vorbestimmte Wert ist.

## Revendications

1. Dispositif pour commander la puissance d'un compresseur variable (2) ayant un évaporateur (6), un embrayage électromagnétique (14) et un moyen (7) de variation de puissance de compresseur, ledit dispositif comprenant :
un moyen (13) de mesure de pression disposé sur un conduit reliant ledit évaporateur (6) et ledit compresseur (2) pour détecter la pression de réfrigérant à un orifice de sortie dudit évaporateur ; et
un moyen (8) de commande pour commander ledit embrayage électromagnétique (14) et ledit moyen (7) de variation de puissance, ledit moyen de commande incluant
un premier moyen de comparaison (39) pour comparer une première pression de réfrigérant détectée par ledit moyen (13) de mesure de pression avec une seconde pression de réfrigérant et fournissant un premier signal de commande quand ladite première pression de réfrigérant est supérieure à ladite seconde pression de réfrigérant, dans lequel un rapport de variation de pression est calculé sur la base de la différence entre lesdites première et seconde pressions de réfrigérant et de la présence dudit premier signal de commande,
un second moyen de comparaison (41) pour comparer une desdites pressions de réfrigérant avec une pression prédéterminée et fournissant un second signal de commande quand ladite pression parmi lesdites pressions de réfrigérant est inférieure à ladite pression prédéterminée,
un troisième moyen de comparaison (42) pour comparer ledit rapport de variation de pression calculé avec un rapport de variation de pression prédéterminé en réponse à la comparaison par ledit second moyen de comparaison (41) et à la présence dudit second signal de commande, ledit troisième moyen de comparaison fournissant un troisième signal de commande quand ledit rapport de variation de pression calculé est inférieur audit rapport de variation de pression prédéterminé, dans lequel, en réponse audit troisième signal de commande, les première, seconde, troisième et quatrième pressions prédéterminées sont réglées pour être égales aux valeurs respectives d'un premier intervalle de valeurs prédéterminées, et en l'absence dudit troisième signal de commande, lesdites première, seconde, troisième et quatrième pressions prédéterminées sont réglées pour être égales à un second intervalle de valeurs prédéterminées,
un quatrième moyen de comparaison (44) pour comparer l'une desdites pressions de réfrigérant avec ladite seconde pression prédéterminée et fournissant un quatrième signal de commande quand ladite pression parmi lesdites pressions de réfrigérant est inférieure à ladite seconde pression prédéterminée, dans lequel ledit moyen (7) de variation de puissance modifie la puissance dudit compresseur en petite puissance en réponse audit quatrième signal de commande,
un cinquième moyen de comparaison (46) pour comparer ladite pression de réfrigérant avec ladite première pression prédéterminée et fournissant un cinquième signal de commande quand ladite pression parmi lesdites pressions de réfrigérant est supérieure à ladite première pression prédéterminée, dans lequel ledit moyen (7) de variation de puissance modifie la puissance dudit compresseur (2) en grande puissance en réponse audit cinquième signal de commande,
un sixième moyen de comparaison (48) pour comparer l'une desdites pressions de réfrigérant avec une quatrième pression prédéterminée en réponse à la comparaison par ledit cinquième moyen de comparaison (46) et à l'absence dudit cinquième signal de commande, ledit sixième moyen de comparaison fournissant un sixième signal de commande quand ladite pression parmi lesdites pressions de réfrigérant est supérieure à ladite quatrième pression prédéterminée, dans lequel ledit embrayage électromagnétique (14) est mis hors fonction en réponse à l'absence dudit sixième signal de commande,
un septième moyen de comparaison (50) pour comparer l'une desdites pressions de réfrigérant avec ladite troisième pression prédéterminée et fournissant un septième signal de commande quand ladite pression parmi lesdites pressions de réfrigérant est supérieure à ladite troisième pression prédéterminée, dans lequel ledit embrayage électromagnétique (14) est mis en fonction en réponse audit septième signal de commande.

2. Dispositif pour commander la puissance d'un compresseur variable (2) ayant un évaporateur (6), un embrayage électromagnétique (14) et un moyen (7) de variation de puissance de compresseur, ledit dispositif comprenant :
un moyen (13) de mesure de pression disposé sur un conduit reliant ledit évaporateur (6) et ledit compresseur (2) pour détecter la pression de réfrigérant à un orifice de sortie dudit évaporateur ; et
un moyen (8) de commande pour commander ledit embrayage électromagnétique (14) et ledit moyen (7) de variation de puissance, ledit moyen de commande incluant
un moyen de prédétermination pour régler initialement les première, seconde, troisième et quatrième pressions prédéterminées pour être égales aux valeurs respectives d'un second intervalle de valeurs prédéterminées,
un premier moyen de comparaison (65) pour comparer ladite pression de réfrigérant détectée avec ladite seconde pression prédéterminée et fournissant un premier signal de commande quand ladite pression de réfrigérant est inférieure à ladite seconde pression prédéterminée, dans lequel ledit moyen (7) de variation de puissance modifie la puissance dudit compresseur en petite puissance en réponse audit premier signal de commande,
un second moyen de comparaison (67) pour détecter si une minuterie est en fonction ou non, mesurant un temps pendant lequel ledit compresseur fonctionne à grande puissance en réponse à la comparaison par ledit premier moyen de comparaison (65) et à la présence dudit premier signal de commande, ledit second moyen de comparaison fournissant un second signal de commande quand ladite minuterie est en fonction,
un troisième moyen de comparaison (70) pour comparer ledit temps avec un temps prédéterminé en réponse à la comparaison par ledit moyen de comparaison (67) et à la présence dudit second signal de commande, et fournissant un troisième signal de commande quand ledit temps est plus grand que ledit temps prédéterminé, dans lequel, en réponse audit troisième signal de commande, lesdites première, seconde, troisième et quatrième pressions prédéterminées sont réglées pour être égales aux valeurs respectives d'un premier intervalle de valeurs prédéterminées, et en l'absence dudit troisième signal de commande, lesdites première, seconde, troisième et quatrième pressions prédéterminées sont maintenues égales aux valeurs respectives dudit second intervalle de valeurs prédéterminées,
un quatrième moyen de comparaison (71) pour comparer ladite pression de réfrigérant détectée avec ladite première pression prédéterminée et fournissant un quatrième signal de commande quand ladite pression de réfrigérant détectée est supérieure à ladite première pression prédéterminée, dans lequel ledit moyen (7) de variation de puissance modifie la puissance dudit compresseur en grande puissance en réponse audit quatrième signal de commande,
un cinquième moyen de comparaison (74) pour comparer ladite pression de réfrigérant détectée avec une quatrième pression prédéterminée en réponse à la comparaison par ledit quatrième moyen de comparaison et à l'absence dudit quatrième signal de commande, ledit cinquième moyen de comparaison fournissant un cinquième signal de commande quand ladite pression de réfrigérant est supérieure à ladite quatrième pression prédéterminée, dans lequel ledit embrayage électromagnétique (14) est mis hors fonction en réponse à l'absence dudit cinquième signal de commande,
un sixième moyen de comparaison (76) pour comparer ladite pression de réfrigérant détectée avec ladite troisième pression prédéterminée et fournissant un sixième signal de commande quand ladite pression de réfrigérant est supérieure à ladite troisième pression prédéterminée, dans lequel ledit embrayage électromagnétique (14) est mis en fonction en réponse audit sixième signal de commande.

3. Dispositif pour commander la puissance d'un compresseur variable (2) ayant un évaporateur (6), un embrayage électromagnétique (14) et un moyen (7) de variation de puissance de compresseur, ledit dispositif comprenant :
un moyen (13) de mesure de pression disposé sur un conduit reliant ledit évaporateur (6) et ledit compresseur (2) pour détecter les pressions de réfrigérant à un orifice de sortie dudit évaporateur ; un premier moyen de capteur de température (15) disposé à l'orifice d'admission dudit évaporateur (6) pour détecter une première température de l'air s'écoulant dans ledit évaporateur, un second moyen de capteur de température (16) disposé à l'orifice de sortie dudit évaporateur pour détecter une seconde température de l'air s'écoulant en dehors dudit évaporateur ; et
un moyen (8) de commande pour commander ledit embrayage électromagnétique (14) et ledit moyen (7) de variation de puissance, ledit moyen de commande incluant :
un premier moyen de comparaison (39) pour comparer une première pression de réfrigérant détectée par ledit moyen (13) de mesure de pression avec une seconde pression de réfrigérant et fournissant un premier signal de commande quand ladite première pression de réfrigérant est supérieure à ladite seconde pression de réfrigérant, dans lequel un rapport de variation de pression est calculé sur la base de la différence entre lesdites première et seconde pressions de réfrigérant en réponse, à la fois au premier moyen de comparaison et à la présence dudit premier signal de commande,
un second moyen de comparaison (41) pour comparer une desdites pressions de réfrigérant avec une pression prédéterminée et fournissant un second signal de commande quand ladite pression parmi lesdites pressions de réfrigérant est inférieure à ladite pression prédéterminée,
un troisième moyen de comparaison (80) pour comparer ledit rapport de variation de pression avec un rapport de variation de pression prédéterminé en réponse à la comparaison par ledit second moyen de comparaison et à la présence dudit second signal de commande, ledit troisième moyen de comparaison fournissant un troisième signal de commande quand ledit rapport de variation de pression est inférieur audit rapport de variation de pression prédéterminé, dans lequel, en réponse audit troisième signal de commande, les première, seconde, troisième et quatrième températures prédéterminées sont réglées pour être égales aux valeurs respectives d'un premier intervalle de valeurs prédéterminées, et en l'absence dudit troisième signal de commande, lesdites première, seconde, troisième et quatrième températures prédéterminées sont réglées pour être égales à un second intervalle de valeurs prédéterminées,
un quatrième moyen de comparaison (81) pour comparer ladite seconde température avec ladite quatrième température prédéterminée et fournissant un quatrième signal de commande quand ladite seconde température est supérieure à ladite quatrième température prédéterminée, dans lequel ledit moyen de variation de puissance modifie la puissance dudit compresseur en petite puissance en réponse à l'absence dudit quatrième signal de commande,
un cinquième moyen de comparaison (82) pour comparer ladite première température avec ladite seconde température prédéterminée en réponse à la comparaison par ledit quatrième moyen de comparaison et à la présence dudit quatrième signal de commande, ledit cinquième moyen de comparaison fournissant un cinquième signal de commande quand ladite première température est inférieure à ladite seconde température prédéterminée, dans lequel ledit moyen de variation de puissance modifie la puissance dudit compresseur en petite puissance en réponse audit cinquième signal de commande,
un sixième moyen de comparaison (84) pour comparer ladite première température avec ladite première température prédéterminée et fournissant un sixième signal de commande quand ladite première température est supérieure à ladite première température prédéterminée, dans lequel ledit moyen (7) de variation de puissance modifie la puissance dudit compresseur en grande puissance en réponse audit sixième signal de commande,
un septième moyen de comparaison (90) pour comparer ladite seconde température avec ladite quatrième température prédéterminée en réponse à la comparaison par ledit sixième moyen de comparaison et à l'absence dudit sixième signal de commande, ledit septième moyen de comparaison fournissant un septième signal de commande quand ladite seconde température est supérieure à ladite quatrième température prédéterminée, dans lequel ledit embrayage électromagnétique (14) est mis hors fonction en réponse à l'absence dudit septième signal de commande,
un huitième moyen de comparaison (88) pour comparer ladite seconde température avec ladite troisième température prédéterminée et fournissant un huitième signal de commande quand ladite seconde température est supérieure à ladite troisième température prédéterminée, dans lequel ledit embrayage électromagnétique (14) est mis en fonction en réponse audit huitième signal de commande.

4. Dispositif selon l'une des revendications 1 à 3, dans lequel ledit dispositif de commande (8) commande ledit moyen (13) de mesure de pression pour détecter la pression de réfrigérant à l'orifice de sortie dudit évaporateur (6) en réponse à la comparaison par ledit premier moyen de comparaison (39) et à l'absence dudit premier signal de commande.

5. Dispositif selon l'une des revendications 1 à 4, dans lequel ledit dispositif de commande (8) commande ledit moyen (13) de mesure de pression pour détecter à nouveau ladite pression de réfrigérant en réponse à la comparaison par ledit second moyen de comparaison (41) et à l'absence dudit second signal de commande.

6. Dispositif selon l'une des revendications 1 à 5, dans lequel ledit quatrième moyen de comparaison (44) est commandé pour comparer à nouveau ladite pression de réfrigérant avec ladite seconde pression prédéterminée en réponse à la comparaison par ledit quatrième moyen de comparaison (44) et à l'absence dudit quatrième signal de commande.

7. Dispositif selon l'une des revendications 1 à 6, dans lequel ledit sixième moyen de comparaison (48) est commandé pour comparer à nouveau ladite pression de réfrigérant avec ladite quatrième pression prédéterminée en réponse à la comparaison par ledit sixième moyen de comparaison (48) et à l'absence dudit sixième signal de commande.

8. Dispositif selon l'une des revendications 1 à 7, dans lequel ledit septième moyen de comparaison (50) est commandé pour comparer à nouveau ladite pression de réfrigérant avec ladite troisième pression prédéterminée en réponse à la comparaison par ledit septième moyen de comparaison (50) et à l'absence dudit septième signal de commande.

9. Dispositif selon l'une des revendications 1 à 8, dans lequel ledit moyen (13) de mesure de pression détecte ladite pression de réfrigérant quatre à huit fois pendant quinze à trente secondes et calcule la moyenne desdites pressions de réfrigérant.

10. Dispositif selon l'une des revendications 1 à 9, dans lequel ledit moyen de commande (8) commande initialement ledit moyen (7) de variation de puissance pour faire fonctionner ledit compresseur à petite puissance pendant un temps initial prédéterminé.

11. Dispositif selon l'une des revendications 1 à 10, dans lequel ledit premier intervalle de valeurs prédéterminées comprend les première, seconde, troisième et quatrième valeurs prédéterminées et/ou dans lequel ledit premier intervalle de valeurs prédéterminées comprend d'autres première, seconde, troisième et quatrième valeurs prédéterminées.

12. Dispositif selon la revendication 11, dans lequel ladite première valeur prédéterminée est plus petite que ladite autre première valeur prédéterminée et/ou ladite autre seconde valeur prédéterminée est plus petite que ladite première valeur prédéterminée.

13. Dispositif selon l'une des revendications 11 et 12 lequel ladite seconde valeur prédéterminée est plus petite que ladite autre seconde valeur prédéterminée et/ou ladite autre troisième valeur prédéterminée est plus petite que ladite seconde valeur prédéterminée.

14. Dispositif selon l'une des revendications 11 à 13, dans lequel ladite troisième valeur prédéterminée est plus petite que ladite autre troisième valeur prédéterminée et/ou ladite autre quatrième valeur prédéterminée est plus petite que ladite troisième valeur prédéterminée.

15. Dispositif selon l'une des revendications 11 à 14, dans lequel ladite quatrième valeur prédéterminée est plus petite que ladite autre quatrième valeur prédéterminée.

16. Dispositif selon l'une des revendications 11 à 15, dans lequel ladite première valeur prédéterminée est plus petite que ladite pression prédéterminée.

17. Dispositif selon l'une des revendications 1 à 16, dans lequel ledit premier moyen de comparaison (39) est commandé pour comparer ladite pression de réfrigérant avec ladite seconde pression prédéterminée en réponse à la comparaison par ledit premier moyen de comparaison (39) et à l'absence dudit premier signal de commande.

18. Dispositif selon l'une des revendications 1 à 17, dans lequel ledit quatrième moyen de comparaison (44) est commandé pour comparer ladite pression de réfrigérant avec ladite première pression prédéterminée en réponse à la comparaison par ledit second moyen de comparaison (41) et à l'absence dudit second signal de commande.

19. Dispositif selon l'une des revendications 1 à 18, dans lequel ledit quatrième moyen de comparaison (44) est commandé pour comparer à nouveau ladite pression de réfrigérant avec ladite première pression prédéterminée et/ou en réponse à la comparaison par ledit sixième moyen de comparaison (48) et à l'absence dudit sixième signal de commande, et ledit sixième moyen de comparaison (48) est commandé pour comparer ladite pression de réfrigérant avec ladite troisième pression prédéterminée en réponse à la comparaison par ledit cinquième moyen de comparaison (46) et à la présence dudit cinquième signal de commande.

20. Dispositif selon l'une des revendications 1 à 19, dans lequel ledit moyen de commande (8) commande initialement ledit moyen (7) de variation de puissance pour faire fonctionner ledit compresseur à petite puissance pendant un temps initial prédéterminé.

21. Dispositif Selon l'une des revendications 2 à 20, dans lequel ledit quatrième moyen de comparaison (44) est commandé pour comparer à nouveau ladite seconde température avec ladite quatrième température prédéterminée en réponse à la comparaison par ledit cinquième moyen de comparaison (46) et à l'absence dudit cinquième signal de commande.

22. Dispositif selon l'une des revendications 2 à 21, dans lequel ledit sixième moyen de comparaison (48) est commandé pour comparer à nouveau ladite première température avec ladite première température prédéterminée et/ou dans lequel en réponse à la comparaison par ledit huitième moyen de comparaison (88) et à l'absence dudit huitième signal de commande, ledit huitième moyen de comparaison (88) est commandé pour comparer ladite seconde température avec ladite troisième température prédéterminée en réponse à la comparaison par ledit septième moyen de comparaison (90) et à la présence dudit septième signal de commande.

23. Dispositif selon l'une des revendications 2 à 22, dans lequel ledit second intervalle de valeurs prédéterminées comprend d'autres première, seconde, troisième et quatrième valeurs prédéterminées.

24. Dispositif selon l'une des revendications 2 à 23, dans lequel ladite troisième valeur prédéterminée est plus petite que ladite seconde valeur prédéterminée et/ou dans lequel ladite autre troisième valeur prédéterminée est plus petite que ladite troisième valeur prédéterminée et/ou dans lequel ladite quatrième valeur prédéterminée est plus petite que ladite autre troisième valeur prédéterminée et/ou dans lequel ladite autre quatrième valeur prédéterminée est plus petite que ladite quatrième valeur prédéterminée.
